# EUROPÄISCHE PATENTSCHRIFT

(11) **EP 2 682 303 B1**
(45) Veröffentlichungstag und Bekanntmachung des Hinweises auf die Patenterteilung: **05.08.2015**
(21) Anmeldenummer: 13175571.2
(22) Anmeldetag: 08.07.2013
(51) Int. Cl.: B60P 7/08, B62D 25/20, B62D 33/04

(54) **Strangpressprofil und Fahrzeug**
Extruded profile and vehicle
Profil extrudé et véhicule

(30) Priorität: 06.07.2012 DE 102012013319
(43) Veröffentlichungstag der Anmeldung: 08.01.2014
(73) Patentinhaber: Frankenstein, Lars, 01108 Dresden (DE); Frankenstein, Reimonda, 01108 Dresden (DE)
(72) Erfinder: Frankenstein, Lars, 01108 Dresden (DE); Frankenstein, Reimonda, 01108 Dresden (DE)
(74) Vertreter: Lippert, Stachow & Partner

(56) Entgegenhaltungen:
- DE-A1- 19 714 678
- DE-A1- 19 949 372
- DE-U1-202008 011 211
- US-A1- 2010 202 850

## Beschreibung

Die Erfindung betrifft ein Fahrzeug, insbesondere einen PKW-Anhänger gemäß Oberbegriff von Anspruch 1, mit einem durch ein Strangpressprofil begrenzten Ladeflächenboden.

In DE 201 10 543 U1 wird ein Lastfahrzeug-Aufbau beschrieben, der auf seiner Längsseite mittels einer Schiebeplane verschließbar ist, wobei die Schiebeplane mittels eines Zollseiles im geschlossenen Zustand gesichert werden kann, wobei von dem am unterem Außenrahmen des Aufbaus befestigten Krampen jeweils mehrere in Längsrichtung hintereinander liegende Krampen gemeinsam fest auf einem Krampenband in festem Längs-Abstand zueinander angeordnet sind und das Krampenband in Längsrichtung verschieblich, aber in allen Querrichtungen hierzu fest am Außenrahmen angeordnet ist, das Krampenband in den Querrichtungen zur Längsrichtung formschlüssig, insbesondere in einem nach außen offenen Kanal am Außenrahmen befestigt ist, entlang des Aufbaus mehrere Krampenbänder hintereinander angeordnet sind und insbesondere keine einzelnen Krampen am unteren Außenrahmen verschiebbar angeordnet sind, und der Außenrahmen in seinem Querschnitt neben dem Kanal eine nach oben außen offene Rungen-Nut und eine demgegenüber zur Fahrzeuglängsmitte hin versetzte, nach oben offene Ladungssicherungs-Nut aufweist und der Außenrahmen insbesondere als Strangpressprofil hergestellt ist, und der Kanal im Außenrahmen soweit nach innen, zur Längsmitte hin versetzt, und insbesondere mit seiner Hauptebene in Längsrichtung betrachtet nach außen überhängend angeordnet ist, dass die Krampen der darin geführten Krampenbänder in der Aufsicht betrachtet innerhalb der Längsaußenkante des Außenrahmens und damit des Aufbaus liegen.

DE 197 14 678 A1 beschreibt eine Schieberunge, insbesondere für einen LKW-Aufbau, mit einem Spannhebel am unteren Ende der Schieberunge zum Festspannen der Schieberunge gegenüber einem Spannprofil des Aufbaus und mit einer Lagerachse zum Verschwenken der Schieberunge und zum Verschieben der Schieberunge entlang einer Längsrichtung des LKW-Aufbaus, wobei der Spannhebel am unteren Ende der Schieberunge verschwenkbar angeordnet ist und ein unteres freies Ende aufweist, das durch Verschwenken des Spannhebels mit einem mit dem unteren freien Ende zusammenwirkenden Spannprofil verbindbar ist. Zu diesem Zweck besteht das Spannprofil aus einer nach schräg oben außen offenen Rinne, in welche der gegenüber der Runge verschwenkte Spannhebel einführbar und durch Zurückschwenken in die mit der Runge fluchtende Lage verspannt werden kann.

Aus DE 199 49 372 A1 ist eine Rahmenkonstruktion bekannt mit zumindest einem Querträger, der sich im Wesentlichen quer zur Fahrzeuglängsachse erstreckt, zumindest einem Außenrahmenprofil, das sich im Wesentlichen parallel zur Fahrzeuglängsachse an dessen äußerer Seite erstreckt, und zumindest einem Verbindungselement, über das der Querträger und das Außenrahmenprofil miteinander verbunden sind und das aus einer Grundplatte und einem damit verbundenen, zumindest eine Durchgangsbohrung aufweisenden Plattenelement besteht, das in einem von 90° verschiedenen Winkel zu der Grundplatte ausgerichtet ist, wobei die Grundplatte in dem Außenrahmenprofil oder dem Querträger aufgenommen ist und das Plattenelement mit dem Querträger bzw. dem Außenrahmenprofil verbünden ist, und wobei eine feste Verbindung zwischen Plattenelement und Querträger bzw. Außenrahmenprofil eine Klemmverbindung zwischen Grundplatte und Außenrahmenprofil oder Querträger bewirkt.

Gegenüber diesem Stand der Technik liegt der vorliegenden Erfindung die Aufgabe zugrunde, ein Fahrzeug, insbesondere einen PKW-Anhänger anzugeben, bei dem der konstruktive Aufbau zur Befestigung von Ladebordwänden vereinfacht wird. Diese Aufgabe wird gelöst durch ein Fahrzeug mit einer Ladefläche, insbesondere einen PKW-Anhänger, mit einem aus Längstraversen und Quertraversen gebildeten Chassis, auf dem ein Ladeflächenboden angeordnet ist, der umlaufend durch Ladebordwände begrenzt ist, wobei der Ladeflächenboden umlaufend durch prismatische Strangpressprofile mit generell L-förmigem Querschnitt und einer senkrecht dazu verlaufenden Längserstreckung begrenzt ist, die jeweils aus einem ersten Schenkel und einem zweiten Schenkel gebildet sind, wobei die Schenkel senkrecht zueinander angeordnet sind, die Innenflächen der Schenkel in einer Kehle und die Außenflächen der Schenkel in einer Außenkante zusammenlaufen, und in den Außenflächen beider Schenkel je eine in der Längserstreckung des Strangpressprofils verlaufende Nut angeordnet ist, wobei die Ladebordwände an den Strangpressprofilen befestigt sind und mindestens eine Ladebordwand durch Scharniere an dem Strangpressprofil befestigt ist, die ein Schwenken der Ladebordwand ermöglichen und die ihrerseits in der Nut in der Außenfläche des ersten Schenkels des Strangpressprofils befestigt sind.

Ein Scharnier zur schwenkbaren Verbindung zweier Bauteile weist üblicherweise zwei Gewerbe oder Bänder auf, die relativ zueinander schwenkbar sind, wobei die Gewerbe an jeweils einem der zu verbindenden Bauteile befestigt werden. Ein solches Scharnier kann beispielsweise in bekannter Weise mit seinem einen Gewerbe mittels Schrauben oder dergleichen an der Ladebordwand befestigt sein und mit seinem anderen Gewerbe in der Nut in der Außenfläche des ersten Schenkels des Strangpressprofils befestigt sein. Handelt es sich dabei um eine T-Nut, so ist die Befestigung des zweiten Gewerbes besonders einfach durch eine in die T-Nut eingeschobene Schraubenmutter oder einen Nutenstein möglich.

Das vorgeschlagene Strangpressprofil weist neue und vorteilhafte Merkmale auf, die bei hoher Biege- und Verwindungssteifigkeit bei gleichzeitig geringem spezifischem Gewicht vorteilhaft im Fahrzeugbau, beispielsweise bei der Befestigung von starren oder schwenkbaren Ladebordwänden verwendbar ist. In verschiedenen speziellen Ausgestaltungen und Weiterbildungen ermöglicht das vorgeschlagene Strangpressprofil weiterhin die Verwendung als tragendes Element, das die Steifigkeit des Chassis' eines Fahrzeugs verbessert, die versenkte Anbringung von Befestigungselementen und Verzurrbügeln im Bereich der Ladefläche eines Fahrzeugs sowie die optische Kaschierung von Befestigungselementen an der Außenseite des Chassis, eines Fahrzeugs.

Das vorgeschlagene Strangpressprofil, das vorteilhaft aus einer Aluminium-Legierung hergestellt ist, ist prismatisch und weist einen generell L-förmigen Querschnitt und eine senkrecht dazu verlaufende Längserstreckung auf, d.h. es handelt sich im geometrischen Sinne um einen Körper, der durch Parallelverschiebung des Querschnitts entlang der Längserstreckung erzeugbar ist. Der generell L-förmige Querschnitt ist aus einem ersten Schenkel und einem zweiten Schenkel gebildet, wobei die Schenkel senkrecht zueinander angeordnet sind, die Innenflächen der Schenkel in einer Kehle und die Außenflächen der Schenkel in einer Außenkante zusammenlaufen.

Mit anderen Worten handelt es sich bei dem vorgeschlagenen Strangpressprofil um ein Winkelprofil, das jedoch in bestimmten Merkmalen von einem einfachen Winkelprofil abweichen. Die Formulierung "generell L-förmig" bedeutet dabei, dass die Schenkel für sich genommen - anders als bei einem einfachen Winkelprofil - nicht völlig ebene Außenflächen und Innenflächen aufweisen müssen, wie im Zusammenhang mit den besonderen Merkmalen des hier vorgeschlagenen Strangpressprofils noch näher erläutert wird. Unter einer Kehle soll dabei eine konkave Fläche und unter einer Außenkante eine konvexe Fläche verstanden werden.

In der grundlegen Gestaltung des hier vorgeschlagenen Strangpressprofils wird vorgeschlagen, dass in den Außenflächen beider Schenkel je eine in der Längserstreckung des Strangpressprofils verlaufende Nut angeordnet ist. Diese Nuten bieten insbesondere für die Verwendung als Strukturelement eines Fahrzeugs besondere Vorteile, wie nachfolgend beschrieben wird.

In einer ersten Ausgestaltung kann vorgesehen sein, dass mindestens eine erste Nut einen ebenen Nutgrund und dazu senkrechte Nutflanken aufweist, wobei die Übergänge der Nutflanken in die Außenfläche durch eine Fase gebildet sind. Eine solche Nut ermöglicht es, das Strangpressprofil durch Befestigungsmittel wie Schrauben oder dergleichen so anzubringen, dass der Schraubenkopf in der ersten Nut angeordnet ist, d.h. relativ zur Außenfläche des betreffenden Schenkels versenkt ist. Alternativ oder zusätzlich können in einer solchen Nut Verzurrbügel so angeordnet werden, dass der Verzurrbügel bedarfsweise herausgezogen oder relativ zur Außenfläche des betreffenden Schenkels versenkt ist. Für die Befestigungsmittel oder Verzurrbügel müssen lediglich an den gewünschten Stellen Bohrungen in den Nutgrund eingebracht werden, durch welche die Befestigungsmittel oder Verzurrbügel sodann geführt werden können.

In einer zweiten Ausgestaltung kann vorgesehen sein, dass mindestens eine zweite Nut als T-Nut mit einem ebenen Nutgrund und hinterschnittenen Nutflanken ausgebildet ist. Diese Ausgestaltung bietet sich an, um weitere Bauteile in einfachster Weise mit dem Strangpressprofil zu verbinden, indem in die T-Nut Schraubenmuttern, Nutensteine oder dergleichen eingeführt und entlang der Längserstreckung des Strangpressprofils an die gewünschte Position verschoben werden, d.h. die Positionierung der Schraubenmuttern, Nutensteine usw. ist stufenlos und ohne weitere Vorarbeiten wie Bohren oder dergleichen möglich. Das weitere Bauteil, beispielsweise eine Ladebordwand, ein Kennzeichenträger, Leuchtenträger, Reflektor, Verzurröse usw. kann nun auf einfachste Weise mit dem Strangpressprofil durch ein Befestigungsmittel wie eine Schrauben oder dergleichen verbunden werden, indem die Schraube in eine korrespondierende Gewindebohrung der Schraubenmutter, des Nutensteins usw. eingeschraubt wird. Der besondere Vorteil liegt darin, dass die Schraubenmutter oder der Nutenstein in der T-Nut verdrehsicher gehalten ist, so dass ein Gegenhalten beim Einschrauben entfällt.

In weiterer Ausgestaltung der Erfindung kann vorgesehen sein, dass mindestens ein Schenkel an seinem freien Ende einen Flansch, d.h. einen in der Längserstreckung des Strangpressprofils erstreckten Kragen oder Überstand aufweist, dessen Außenfläche mit der Außenfläche des mindestens einen Schenkels in derselben Ebene liegt, d.h. die Außenfläche des jeweiligen Schenkels geht in die Außenfläche des Flansches über. Dieser Flansch kann zum Abdecken verschiedener anderer Bauteile nützlich sein, wie weiter unten im Zusammenhang mit dem ebenfalls vorgeschlagenen Fahrzeug noch näher erläutert wird.

Das vorgeschlagene Fahrzeug weist eine Ladefläche sowie ein aus Längstraversen und Quertraversen gebildetes Chassis auf, auf dem ein Ladeflächenboden angeordnet ist, der umlaufend durch Ladebordwände begrenzt ist. Bei einem solchen Fahrzeug, insbesondere einem PKW-Anhänger, wird nunmehr vorgeschlagen, dass der Ladeflächenboden umlaufend durch Strangpressprofile begrenzt ist, die wie oben beschrieben ausgebildet sind, und die Ladebordwände an diesen Strangpressprofilen befestigt sind. Wie oben bereits beschrieben hat die Verwendung des beschriebenen Strangpressprofils insbesondere im Fahrzeugbau viele Vorteile, beispielsweise eine hohe Biege- und Verwindungssteifigkeit bei gleichzeitig geringem spezifischem Gewicht, die Verwendbarkeit als tragendes Element eines Fahrzeugs, die Anbringung von weiteren Bauteilen vermittels des Strangpressprofils usw.

In einer anderen Ausgestaltung ist vorgesehen, dass mindestens eine Ladebordwand durch Konsolen an dem Strangpressprofil starr befestigt ist, die ihrerseits in der Nut in der Außenfläche des ersten Schenkels des Strangpressprofils befestigt sind. Konsolen in diesem Sinne können dabei einfache Abschnitte eines Winkelprofils sein, dessen einer Schenkel mit der Ladebordwand verbunden ist und dessen anderer Schenkel in der Nut in der Außenfläche des ersten Schenkels des Strangpressprofils befestigt ist. Diese Befestigung kann in gleicher Weise wie oben für das Scharnier beschrieben realisiert sein, d.h. beispielsweise auch in einer T-Nut.

In weiteren Ausgestaltungen des vorgeschlagenen Fahrzeugs kann vorgesehen sein, dass das Strangpressprofil durch Verbindungsmittel mit dem Chassis verbunden ist, die in der Nut in der Außenfläche des zweiten Schenkels des Strangpressprofils angeordnet sind, oder/und dass in der Nut in der Außenfläche des zweiten Schenkels des Strangpressprofils Verzurrbügel angeordnet sind. Weder die Befestigungsmittel noch die Verzurrbügel stören damit die Ebenheit der Ladefläche, weil sie in der Nut versenkt sind. Um Verschmutzungen der Nut zu verhindern, kann diese durch eine Abdeckleiste verschlossen sein, wobei Schraubenköpfe verdeckt werden können, während die Bereiche, in denen Verzurrbügel angeordnet sind, offen bleiben müssen, um die Verzurrbügel aus ihrer versenkten Anordnung zur Benutzung herausziehen zu können.

Schließlich wird bei dem beschriebenen Fahrzeug vorgeschlagen, dass ein Schenkel eines Strangpressprofils, bei dem dieser Schenkel an seinem freien Ende einen Flansch aufweist, dessen Außenfläche mit der Außenfläche des Schenkels in derselben Ebene liegt, an den Rand des Ladeflächenbodens stößt, wobei der Flansch den Rand des Ladeflächenbodens überdeckt. Derartige Ladeflächenböden werden oftmals aus Schichtholz oder anderen, jedenfalls vergleichsweise weichen Materialien gefertigt. Durch die hier vorgeschlagene Ausgestaltung wird erreicht, dass die Kante eines solchen Ladeflächenbodens durch die mit dem Flansch erreichte Überdeckung vor Beschädigungen durch äußere mechanische Einwirkung geschützt ist.

Alternativ oder zusätzlich kann auch vorgesehen sein, dass der andere Schenkel des Strangpressprofils ebenfalls einen solchen Flansch aufweist, der beispielsweise dafür genutzt werden kann, Befestigungselemente wie Schrauben oder dergleichen, die an der Außenseite des Chassis' angeordnet sind und beispielsweise dazu dienen können, Längstraversen und Quertraversen miteinander zu verbinden, optisch zu verbergen.

Nachfolgend wird die Erfindung anhand von Ausführungsbeispielen und zugehörigen Zeichnungen näher erläutert. Dabei zeigen
Fig. 1 zwei perspektivische Ansichten eines Strangpressprofils gemäß einem ersten Ausführungsbeispiel, und
Fig. 2 einen Teilquerschnitt durch einen PKW-Anhänger mit einem Strangpressprofil gemäß Fig. 1, und
Fig. 3 eine perspektivische Ansicht des in Fig. 2 dargestellten Bereichs des PKW-Anhängers.

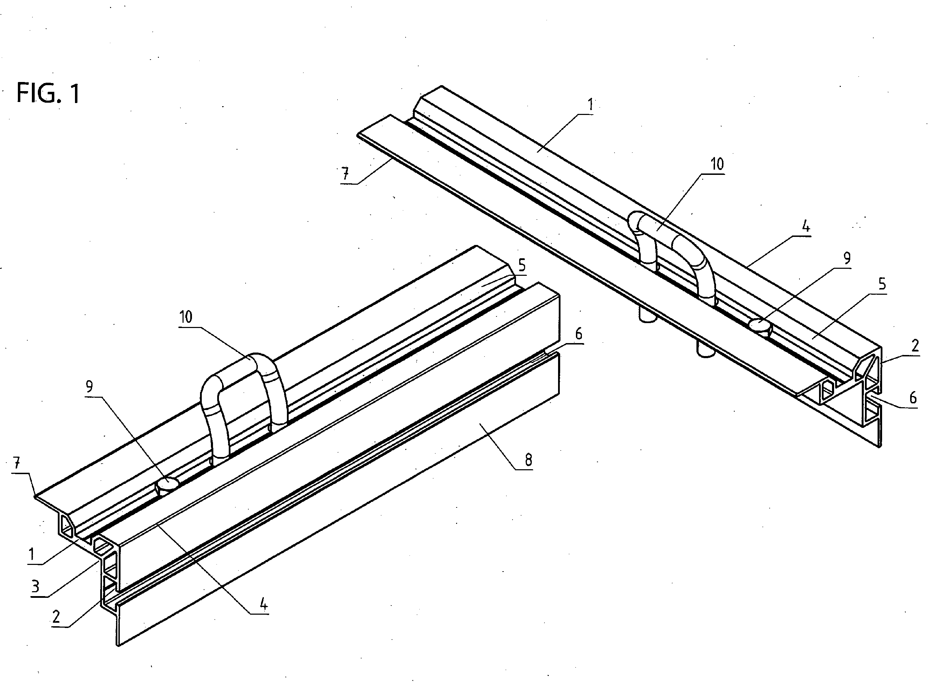

Bei dem in Fig. 1 gezeigten Strangpressprofil handelt es sich um ein Winkelprofil mit komplexem Querschnitt, der Hohlräume in Form von Kammern mit Kammerwänden aufweist, welche die Innenflächen und Außenflächen des ersten Schenkels 1 und des zweiten Schenkels 2 miteinander verbinden und so zu einer hohen Biege- und Verwindungssteifigkeit des Strangpressprofils beitragen. Dieser Querschnitt ist generell L-förmig. Das Strangpressprofil weist eine senkrecht zu diesem Querschnitt verlaufende Längserstreckung auf. Es ist aus einem ersten Schenkel 1 und einem zweiten Schenkel 2 gebildet die senkrecht zueinander angeordnet sind, wobei die Innenflächen der Schenkel 1,2 in einer Kehle 3 und die Außenflächen der Schenkel 1,2 in einer Außenkante 4 zusammenlaufen. In den Außenflächen beider Schenkel 1,2 ist je eine in der Längserstreckung des Strangpressprofils verlaufende Nut 5,6 angeordnet.

In der Außenfläche des ersten, in der gewählten Darstellung horizontal ausgerichteten Schenkels 1 ist eine erste Nut 5 mit einem ebenen Nutgrund und dazu senkrechten Nutflanken angeordnet, deren Übergänge in die Außenfläche des ersten Schenkels 1 durch je eine Fase gebildet sind.

In der Außenfläche des ersten, in der gewählten Darstellung vertikal ausgerichteten Schenkels 2 ist eine zweite Nut 6 angeordnet, die als T-Nut mit einem ebenen Nutgrund und hinterschnittenen Nutflanken ausgebildet ist.

Der erste Schenkel 1 weist an seinem freien Ende einen ersten Flansch 7 auf, dessen Außenfläche mit der Außenfläche des ersten Schenkels 1 in derselben Ebene liegt.

Der zweite Schenkel 2 weist an seinem freien Ende einen zweiten Flansch 8 auf, dessen Außenfläche mit der Außenfläche des zweiten Schenkels 2 in derselben Ebene liegt.

In der ersten Nut 5 des ersten Schenkels 1 sind beispielhaft ein Befestigungsmittel 9 zur Verbindung des Strangpressprofils mit einer Gegenfläche sowie ein Verzurrbügel 10 zum Verzurren von Ladung auf der Ladefläche eines Fahrzeugs dargestellt, die jeweils durch Bohrungen ragen, welche in den Nutgrund der ersten Nut 5 eingebracht sind.

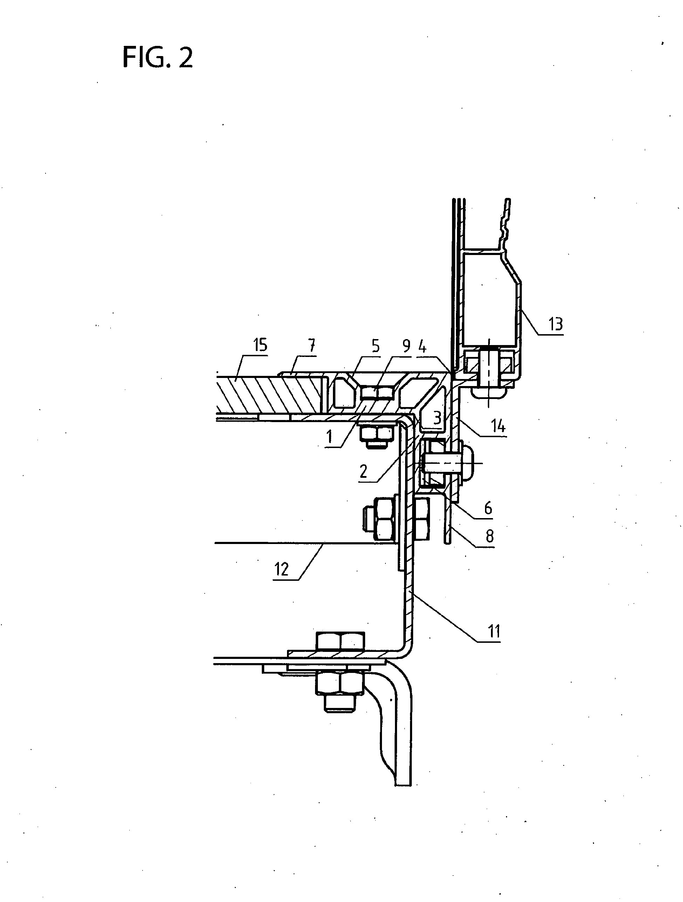

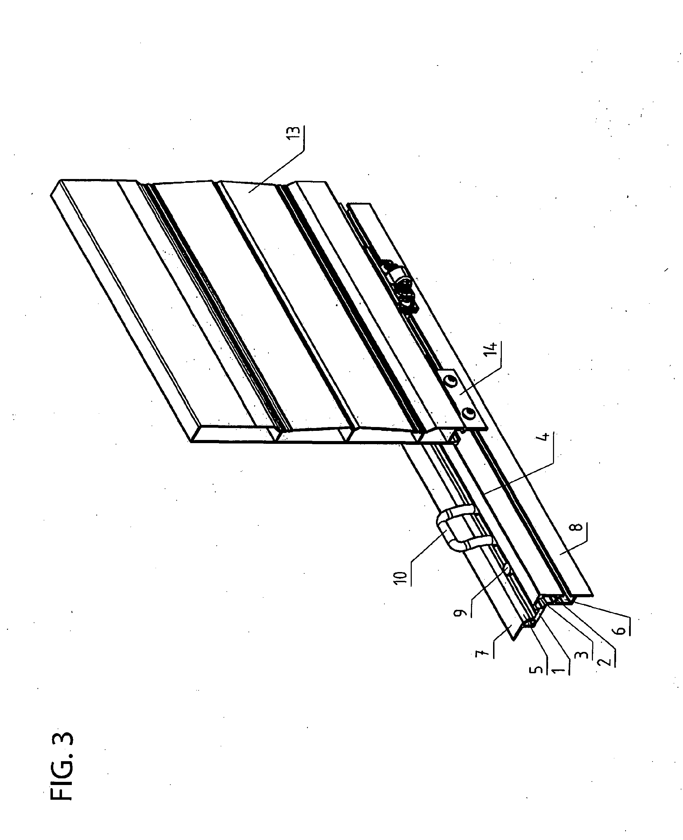

Die praktische Verwendung eines Strangpressprofils gemäß Fig. 1 bei einem Fahrzeug mit einer Ladefläche, insbesondere einem PKW-Anhänger, ist in Fig. 2 und Fig. 3 gezeigt. Fig. 2 zeigt einen teilweisen Querschnitt durch einen PKW-Anhänger in dem Bereich, in welchem das Strangpressprofil angeordnet und sowohl mit dem Chassis des Fahrzeugs als auch mit den Ladebordwänden des Fahrzeugs verbunden ist, und Fig. 3 zeigt eine perspektivische Darstellung dieses Bereichs.

Der PKW-Anhänger weist ein aus Längstraversen 11 und Quertraversen 12 gebildetes Chassis auf, auf dem ein Ladeflächenboden 15 angeordnet ist, der umlaufend durch Ladebordwände 13 begrenzt ist. Der Ladeflächenboden 15 ist umlaufend durch Strangpressprofile der beschriebenen Art begrenzt und die Ladebordwände 13 sind an den Strangpressprofilen befestigt.

In dem in der gewählten Darstellung gezeigten Bereich ist die Ladebordwand 13 durch Konsolen 14 an dem Strangpressprofil starr befestigt. An der Ladebordwand 13 ist mittels Schrauben eine Konsole 14 befestigt. Die Konsole 14 ist ihrerseits in der zweiten Nut 6 in der Außenfläche des zweiten Schenkels 2 des Strangpressprofils durch Schrauben befestigt. In der zweiten Nut 6 des Strangpressprofils sind Schraubenmuttern verschiebbar aber drehfest angeordnet, in welche die Schrauben eingeschraubt sind, die die Konsole 14 mit dem Strangpressprofil verbinden. Rein beispielhaft ist in Fig. 3 rechts neben der Konsole 14 ein Scharnier (ohne Bezugszeichen) dargestellt, das alternativ zu Konsolen 14 in der zweiten Nut 6 in gleicher Weise wie die Konsole 14, nämlich beispielsweise durch in die zweite Nut 6 eingeschobene Schraubenmuttern, Nutensteine oder dergleichen, an dem Strangpressprofil befestigt sein könnte, um die Ladebordwand 13 schwenkbar mit dem Strangpressprofil zu verbinden.

Das Strangpressprofil ist durch Befestigungsmittel 9, die im Ausführungsbeispiel als Schrauben ausgeführt sind, mit dem Chassis verbunden. Diese Schrauben 9 sind in der ersten Nut 5 in der Außenfläche des ersten Schenkels 1 des Strangpressprofils angeordnet. Ebenfalls in der ersten Nut 5 in der Außenfläche des ersten Schenkels 1 ist, wie in Fig. 3 gezeigt, in dafür vorgesehenen Bohrungen im Nutgrund der ersten Nut 5 ein Verzurrbügel 10 angeordnet, der bedarfsweise in der ersten Nut 5 versenkbar oder aus dieser herausziehbar ist.

Der erste Schenkel 1 des Strangpressprofils stößt mit seiner Stirnseite an den Rand des Ladeflächenbodens 15 und der erste Flansch 7 überdeckt den Rand des Ladeflächenbodens 15, so dass der Ladeflächenboden 15 vor Beschädigung geschützt ist.

Der am zweiten Schenkel 2 des Strangpressprofils angeordnete zweite Flansch 8 hingegen verdeckt Schrauben, die die Längstraversen 11 mit den Quertraversen 12 des Chassis' des PKW-Anhängers verbinden.

### Fahrzeug

### Bezugszeichenliste

- 1: erster Schenkel
- 2: zweiter Schenkel
- 3: Kehle
- 4: Außenkante
- 5: erste Nut, Nut mit angefasten Nutflanken
- 6: zweite Nut, T-Nut mit hinterschnittenen Nutflanken
- 7: erster Flansch
- 8: zweiter Flansch
- 9: Befestigungsmittel
- 10: Verzurrbügel
- 11: Längstraverse
- 12: Quertraverse
- 13: Ladebordwand
- 14: Konsole
- 15: Ladeflächenboden

## Patentansprüche

1. Fahrzeug mit einer Ladefläche, insbesondere PKW-Anhänger, mit einem aus Längstraversen (11) und Quertraversen (12) gebildeten Chassis, auf dem ein Ladeflächenboden (15) angeordnet ist, der umlaufend durch Ladebordwände (13) begrenzt ist, wobei der Ladeflächenboden (15) umlaufend durch prismatische Strangpressprofile mit generell L-förmigem Querschnitt und einer senkrecht dazu verlaufenden Längserstreckung begrenzt ist, die jeweils aus einem ersten Schenkel (1) und einem zweiten Schenkel (2) gebildet sind, wobei die Schenkel (1,2) senkrecht zueinander angeordnet sind, die Innenflächen der Schenkel (1,2) in einer Kehle (3) und die Außenflächen der Schenkel (1,2) in einer Außenkante (4) zusammenlaufen, und in den Außenflächen beider Schenkel (1,2) je eine in der Längserstreckung des Strangpressprofils verlaufende Nut (5,6) angeordnet ist, **dadurch gekennzeichnet, dass** die Ladebordwände (13) an den Strangpressprofilen befestigt sind, wobei mindestens eine Ladebordwand (13) durch Scharniere an dem Strangpressprofil befestigt ist, die ein Schwenken der Ladebordwand (13) ermöglichen und die ihrerseits in der zweiten Nut (6) in der Außenfläche des zweiten Schenkels (2) des Strangpressprofils befestigt sind.

2. Fahrzeug nach Anspruch 1, **dadurch gekennzeichnet, dass** mindestens eine erste Nut (5) einen ebenen Nutgrund und dazu senkrechte Nutflanken aufweist, wobei die Übergänge der Nutflanken in die Außenfläche durch eine Fase gebildet sind.

3. Fahrzeug nach Anspruch 1 oder 2, **dadurch gekennzeichnet, dass** mindestens eine zweite Nut (6) als T-Nut mit einem ebenen Nutgrund und hinterschnittenen Nutflanken ausgebildet ist.

4. Fahrzeug nach Anspruch 1 oder 2, **dadurch gekennzeichnet, dass** mindestens ein Schenkel (1,2) an seinem freien Ende einen Flansch (7,8) aufweist, dessen Außenfläche mit der Außenfläche des mindestens einen Schenkels (1,2) in derselben Ebene liegt.

5. Fahrzeug nach einem der Ansprüche 1 bis 4, **dadurch gekennzeichnet, dass** mindestens eine Ladebordwand (13) durch Konsolen (14) an dem Strangpressprofil starr befestigt ist, die ihrerseits in der zweiten Nut (6) in der Außenfläche des zweiten Schenkels (2) des Strangpressprofils befestigt sind.

6. Fahrzeug nach einem der Ansprüche 1 bis 5, **dadurch gekennzeichnet, dass** das Strangpressprofil durch Befestigungsmittel (9) mit dem Chassis verbunden ist, die in der ersten Nut (5) in der Außenfläche des ersten Schenkels (1) des Strangpressprofils angeordnet sind.

7. Fahrzeug nach einem der Ansprüche 1 bis 6, **dadurch gekennzeichnet, dass** in der ersten Nut (5) in der Außenfläche des ersten Schenkels (1) des Strangpressprofils Verzurrbügel (10) angeordnet sind.

8. Fahrzeug nach einem der Ansprüche 1 bis 7, **dadurch gekennzeichnet, dass** der erste Schenkel (1) eines nach Anspruch 4 ausgestalteten Strangpressprofils an den Rand des Ladeflächenbodens (15) stößt, wobei der erste Flansch (7) den Rand des Ladeflächenbodens (15) überdeckt.

## Claims

1. Vehicle with a loading area, in particular a car trailer, with a chassis which is formed from longitudinal members (11) and transverse members (12) and on which there is arranged a loading area floor (15) which is peripherally delimited by loading area side walls (13), wherein the loading area floor (15) is peripherally delimited by prismatic extruded profiles with a generally L-shaped cross section and a longitudinal extent running perpendicularly thereto, which profiles are in each case formed from a first leg (1) and a second leg (2), wherein the legs (1, 2) are arranged perpendicularly to one another, the inner surfaces of the legs (1, 2) merge together in a chamfer (3) and the outer surfaces of the legs (1, 2) merge together in an outer edge (4), and a groove (5, 6) running in the longitudinal extent of the extruded profile is in each case arranged in the outer surfaces of both legs (1, 2), **characterized in that** the loading area side walls (13) are fastened to the extruded profiles, wherein at least one loading area side wall (13) is fastened to the extruded profile by means of hinges which allow a pivoting movement of the loading area side wall (13) and which for their part are fastened in the second groove (6) in the outer surface of the second leg (2) of the extruded profile.

2. Vehicle according to Claim 1, **characterized in that** at least a first groove (5) has a planar groove base and groove flanks perpendicular thereto, wherein the transitions of the groove flanks into the outer surface are formed by a bevel.

3. Vehicle according to Claim 1 or 2, **characterized in that** at least a second groove (6) is designed as a T-groove with a planar groove base and undercut groove flanks.

4. Vehicle according to Claim 1 or 2, **characterized in that** at least one leg (1, 2) has at its free end a flange (7, 8) whose outer surface lies in the same plane with the outer surface of the at least one leg (1, 2).

5. Vehicle according to one of Claims 1 to 4, **characterized in that** at least one loading area side wall (13) is rigidly fastened to the extruded profile by means of brackets (14) which for their part are fastened in the second groove (6) in the outer surface of the second leg (2) of the extruded profile.

6. Vehicle according to one of Claims 1 to 5, **characterized in that** the extruded profile is connected to the chassis by fastening means (9) which are arranged in the first groove (5) in the outer surface of the first leg (1) of the extruded profile.

7. Vehicle according to one of Claims 1 to 6, **characterized in that** lashing brackets (10) are arranged in the first groove (5) in the outer surface of the first leg (1) of the extruded profile.

8. Vehicle according to one of Claims 1 to 7, **characterized in that** the first leg (1) of an extruded profile configured according to Claim 4 butts against the edge of the loading area floor (15), wherein the first flange (7) covers the edge of the loading area floor (15).

## Revendications

1. Véhicule comprenant une surface de chargement, en particulier remorque de poids-lourds, comprenant un châssis formé de traverses longitudinales (11) et de traverses transversales (12), sur lequel châssis est disposé un fond de surface de chargement (15) qui est limité sur son pourtour par des parois de bord de chargement (13), le fond de surface de chargement (15) étant limité sur son pourtour par des profilés extrudés prismatiques de section transversale généralement en forme de L et d'étendue longitudinale s'étendant perpendiculairement à celle-ci, lesquels sont formés à chaque fois d'une première branche (1) et d'une deuxième branche (2), les branches (1, 2) étant disposées perpendiculairement l'une à l'autre, les surfaces internes des branches (1, 2) se rejoignant au niveau d'une gorge (3) et les surfaces extérieures des branches (1, 2) se rejoignant en une arête extérieure (4), et dans les surfaces extérieures des deux branches (1, 2) étant à chaque fois disposée une rainure (5, 6) s'étendant dans l'étendue longitudinale du profilé extrudé, **caractérisé en ce que** les parois de bord de chargement (13) sont fixées aux profilés extrudés, au moins une paroi de bord de chargement (13) étant fixée par des charnières au profilé extrudé, lesquelles permettent un pivotement de la paroi de bord de chargement (13) et lesquelles sont pour leur part fixées dans la deuxième rainure (6) dans la surface extérieure de la deuxième branche (2) du profilé extrudé.

2. Véhicule selon la revendication 1, **caractérisé en ce qu'**au moins une première rainure (5) présente un fond de rainure plan et des flancs de rainure perpendiculaires à celui-ci, les transitions des flancs de rainure à la surface extérieure étant formées par un biseau.

3. Véhicule selon la revendication 1 ou 2, **caractérisé en ce qu'**au moins une deuxième rainure (6) est réalisée en forme de rainure en T avec un fond de rainure plan et des flancs de rainure en contre-dépouille.

4. Véhicule selon la revendication 1 ou 2, **caractérisé en ce qu'**au moins une branche (1, 2) présente au niveau de son extrémité libre une bride (7, 8) dont la surface extérieure est située dans le même plan que la surface extérieure de l'au moins une branche (1, 2).

5. Véhicule selon l'une quelconque des revendications 1 à 4, **caractérisé en ce qu'**au moins une paroi de bord de chargement (13) est fixée rigidement par des consoles (14) au profilé extrudé, lesquelles consoles sont pour leur part fixées dans la deuxième rainure (6) dans la surface extérieure de la deuxième branche (2) du profilé extrudé.

6. Véhicule selon l'une quelconque des revendications 1 à 5, **caractérisé en ce que** le profilé extrudé est connecté au châssis par des moyens de fixation (9) qui sont disposés dans la première rainure (5) dans la surface extérieure de la première branche (1) du profilé extrudé.

7. Véhicule selon l'une quelconque des revendications 1 à 6, **caractérisé en ce que** des étriers d'arrimage (10) sont disposés dans la première rainure (5) dans la surface extérieure de la première branche (1) du profilé extrudé.

8. Véhicule selon l'une quelconque des revendications 1 à 7, **caractérisé en ce que** la première branche (1) d'un profilé extrudé configuré selon la revendication 4 est en aboutement contre le bord du fond de surface de chargement (15), la première bride (7) recouvrant le bord du fond de surface de chargement (15).
